# EUROPÄISCHE PATENTSCHRIFT

(11) **EP 0 850 743 B1**
(45) Veröffentlichungstag und Bekanntmachung des Hinweises auf die Patenterteilung: **16.01.2002**
(21) Anmeldenummer: 97250362.7
(22) Anmeldetag: 27.11.1997
(51) Int. Cl.: B29B 17/02, B29B 13/10

(54) **Verfahren zur Aufbereitung und Verarbeitung von Kunststoffen, insbesondere von Polyvinylbutyral und Herstellung eines neuen Stoffes**
Method for processing and conditioning plastic materials, especially polyvinylbutyral, and manufacturing of the recycled product
Procédé de conditionnement et traitement de matières plastiques, en particulier de polyvinylbutyral, et manufacture du produit recyclé

(30) Priorität: 27.11.1996 DE 19650848
(43) Veröffentlichungstag der Anmeldung: 01.07.1998
(73) Patentinhaber: Kunststoff- und Umwelttechnik GmbH, 03149 Forst (DE)
(72) Erfinder: Unger, Reinhard, 03149 Forst (DE)
(74) Vertreter: Haschick, Gerald

(56) Entgegenhaltungen:
- EP-A- 0 294 094
- EP-A- 0 567 876
- EP-A- 0 792 730
- DE-C- 19 509 244
- PATENT ABSTRACTS OF JAPAN vol. 18, no. 157 (C-1180), 16.März 1994 & JP 05 329396 A (SEKISUI CHEM. CO. LTD.), 14.Dezember 1993, & DATABASE WPI Section Ch, Week 9403 Derwent Publications Ltd., London, GB; Class AP, AN 94-022065 (03) & JP 05 329 396 A (SEKISUI CHEM. IND. CO. LTD.) , 14.Dezember 1993

## Beschreibung

Die Erfindung betrifft ein Verfahren zur Aufbereitung und Verarbeitung von Kunststoffen, insbesondere von Polyvinylbutyral (PVB) oder in Verbindung mit PVB und Herstellung eines neuen Stoffes. Dabei ist das PVB-Kunststoff in zerkleinerter Form mit Inhaltsstoffen, wie zum Beispiel Glas, vorhanden. Durch das erfindungsgemäße Verfahren wird das PVB-Material von den beinhalteten Reststoffen getrennt und als Endergebnis ein wiederverwendbares Sekundärprodukt geschaffen.
Der bisherige Stand der Technik zeigt Lösungen auf, wobei Kunststoffreste mit beinhalteten restbestandenen anderen Materialien zur Rückgewinnung mit Lösungsmitteln usw. verwendet wurden. Die Anwendung von Lösungsmitteln zur Rückgewinnung dieser Kunststoffe erweist sich aus Gründen nicht definierbarer Verunreinigungen und der daraus resultierenden Probleme einer Lösungsmittelrückgewinnung als sehr kompliziert, dadurch ist der Nachteil begründet.
Des weiteren ist eine Patentschrift DE 195 09 244 als Verfahren für Zwischenfolien aus Verbundglasscheiben bekannt, wobei Folien aus Polyvinylbutyral oder vergleichbaren Polymeren durch Stoß- und Reibungskräfte verarbeitet werden, nachfolgend eine Flüssigkeitsströmung unterzogen wird bzw. ein Extruder nachgeschaltet ist. Die Nachteile dieses Verfahrens liegen darin begründet, daß das aus dem Extruder entstehende Material zu einer Weiterverarbeitung schwer verwendbar ist.

Ziel der Erfindung ist es, ein Verfahren zur Aufbereitung und Verarbeitung von Kunststoffen, insbesondere von PVB, mit einem ökonomisch vertretbaren Recyclingaufwand zu schaffen.

Aufgabe der Erfindung ist es, ein Verfahren zur Aufbereitung und Verarbeitung von Kunststoffen zu realisieren, in dem die Nachteile des Standes der Technik beseitigt werden, sowie einen Einsatz von Lösungsmitteln bei dem Verfahren zur Aufbereitung und Verarbeitung von recyclierbaren Kunststoffen zu vermeiden und als Verfahrensprodukt ein verwendbares Sekundärprodukt zu schaffen, woraus ein neuer Stoff hergestellt wird.

Die Aufgabe wird erfindungsgemäß dadurch gelöst, daß die Verfahrensschritte des Hauptanspruchs 1 mit seinen Unteransprüchen angewandt werden.

Dabei besteht das Verfahren zur Aufbereitung und Verarbeitung von Kunststoffen, insbesondere von PVB, aus den wesentlichen Teilen Aufbereitung, Trocknung, thermische Verarbeitung und Formgebung. Aufgrund der Eigenschaften des Materials müssen die Prozesse in der Aufeinanderfolge derart gekoppelt werden, daß ein Verfahrensfluß in dem erfindungsgemäßen Verfahren gewährleistet wird. Das vorzerkleinerte Material gelangt in einen Lagerbehälter und anschließend in einen Behälter mit einer Doppelschnecke, die gegenläufig fördert und in dem über Öffnungen am Boden, in denen Vibrationskörper sitzen, Verunreinigungen, wie zum Beispiel Glas, ausgetragen werden. Den Reinigungsvorgang in den Behältern bewirkt bzw. unterstützt ein Wasserkreislauf. Verunreinigungen und vom PVB abgelöste Teile, zum Beispiel auch Aluminiumpartikel und mineralische Partikel, gelangen über eine Fördereinrichtung in einen Sammelbehälter. Durch die zeitweise Beaufschlagung mit Wasser verändert sich die Oberflächeneigenschaft des gereinigten Kunststoffmaterials. Im nächsten Aufbereitungsschritt durchläuft das Material als Schüttung eine Folge von Schneckenförderprozessen unter Beaufschlagung mit Wasser und Heißluft in Verbindung mit einem Klassierprozeß. Es wird durch die Temperierung des Gutes im Wasserstrom erreicht, daß durch die Kombination von Wasserabscheidung, Vermahlung, Einleitung des Gutes in den Gasstrom des Folgeprozesses und durch Temperaturerhöhung die Diffusionsschicht an Weichmacherzusätzen verarmt und somit der Folgeprozeß verfahrensgemäß durchfahren werden kann. Dabei geht das Material aus einer angefeuchteten Schüttung, in der es in Bewegung gehalten wird und keine Klebeeffekte aufweist, in die Flugförderung über, wobei in Verbindung mit der dazwischengeschalteten Vermahlung durch die Prozeßführung über den Systemdruck die relative Geschwindigkeit des Gutes, die Partikelabstände und auch bestimmte Materialeigenschaften für die Weiterverarbeitung eingestellt werden können.

Der Prozeß, in dem gleichzeitig die Trocknung eingeleitet wird, verläuft mehrstufig in Fallschächten, in die im unteren Teil Heißluft eingetragen wird, die einen Förderstrom in einer Druckleitung und einen Gegenstrom im Fallschacht aufgeteilt wird. Die Druckleitung verbindet die Prozesse.

In einem weiteren Verfahrensschritt wird das Material in einen Mischbehälter gegeben, in dem Kunststoffpartikel und die an mehreren Stellen zugeführten Zusatzkomponenten eine lockere Verbindung eingehen, wodurch bei kleiner 80 °C ein förderfähiger Gutstrom aufrechterhalten wird. Dieser Behälter dient in diesem Verfahrensschritt der Materialpufferung. Die zugeführten Zusatzkomponenten können elastomere, thermoelastische, organische, mineralische Komponenten sein. Diese Komponenten können vorteilhafterweise Zellulose, Glas, Gummi, Aluminium, Kreide, Bariumsulfat, Polyolefine und/oder leichtverdampfliche flüssige oder feste Stoffe sein. Das Material weist als Strang eine Konsistenz auf, die eine zeitweise Lagerung des Materials außerhalb des Behälters gestattet.

Im nächsten Verfahrensschritt wird die thermische Verarbeitung des Kunststoffkomponentengemisches oder des Kunststoffes durchgeführt. Bei Eintritt in die thermische Verarbeitung erfolgt eine Verdichtung der Kunststoffpartikel und Zusatzstoffe durch mechanische Kräfte. Danach kann das produktführende System und die im Mischgut verbliebenen Restvolumina durch Evakuieren des Raumes auf einen Unterdruck von etwa 1000 Pa gebracht werden, so daß in den verbliebenen Produktzwischenräumen der Partikeldruck der flüchtigen Komponente sinkt. Von der Partikelgröße, der Temperatur und den Konzentrationen abhängig sinkt die in Lösung befindliche Menge der flüchtigen Komponenten, wie zum Beispiel Wasser, Weichmacher, Lösungsmittel, Naphthalin und die angeschlossenen Gase, wie zum Beispiel Stickstoff, auf verarbeitungsgerechte Werte. Der nachfolgende Extrusionsprozeß, der sich konventionell gliedert, besteht aus Förder-, Kompression- und Aufschmelzphase, wobei die Förder- und Kompressionsphase bei Reduzierung der Relaxion einen Zeitanteil von über 80 % einnimmt. Die weitere Anhebung der Temperatur des Extrudates auf über 165 °C beginnt im zweiten Drittel der Verarbeitungszeit. Das Extrudat wird bei einem Druck von ca. 100 bar erschmolzen und der Filtration zugeführt. Wesen der Filtration ist die zwingend kontinuierliche Vergleichsmäßigung der verteilten Feststoffe, Flüssigkeiten und von compoundierten Stoffen, sowie die Abtrennung von Überkorn und eine lineare Ausrichtung der Komponenten. Der mittels geeigneter Werkzeuge bei Drücken über 15 bis 60 kPa ausgegossene Film wird kalandriert oder geglättet. Die Oberfläche wird durch Auftragen von Komponenten, die sich für eine Extrusion nicht eignen, präpariert und/oder durch Laminieren mehrerer Schichten aufbereitet. Es entstehen Flächengebilde mit vorteilhaften Verarbeitungseigenschaften und gezielt von der Verarbeitung und Präparierung abhängigen Materialeigenschaften.

Mit dem erfindungsgemäßen Verfahren werden folgende wesentlichen Vorteile erreicht. Mit dem Verfahren zur Aufbereitung und Verarbeitung von Kunststoffen, insbesondere von PVB Material, können lösungsmittelfreie, hochwertige Kunststoffe wiedergewonnen werden.

Die Reinigungskaskade gestattet eine schrittweise, zum Materialzustand angepaßte Abtrennung von Fremdstoffen. Aus dem Fluid kann das Wasser im Kreislauf für Reinigungszwecke regeneriert werden. Es entstehen keine Emissionen. Rückstände sind nicht durch Fremdstoffe belastet, sondern können in weitere Aufbereitungsprozesse eingeführt werden.

Hergestellt wird ein thermoplastisches Elastomer in multivalenter Anwendbarkeit auch bei sehr tiefen Temperaturen, das thermoplastisch verarbeitet werden kann, so daß durch eine Kombination und Abstimmung der Stoffeigenschaften des PVB und der optimalen Verarbeitungsbedingungen und Produkteigenschaften wesentliche ökonomische Effekte erzielt werden können. Zur Anwendung kommen kostengünstige Werkstoffe, aus denen hochwertige Produkte hergestellt werden können.

Aus den verfahrensbedingten gewonnenen PVB-Kunststoffsekundärprodukt werden neue Stoffe hergestellt. Dabei wird dem PVB-Kunstoffsekundärprodukt mindestens 5% PP oder PE zugemischt. Der neue entstandene Stoff weist durch die Untermischung der Anteile PP oder PE eine spezielle Wasseraufnahmefähigkeit und Wasserabgabefähigkeit auf, welche sich besonders auf die Anwendungsfälle bei Folien, Platten, Planen, Abdeckflächen, Flächen und Formkörper usw. zur Abdichtung z.B. von Staub, Flüssigkeiten wie Öle, auch gegen physikalischen Wirkungen wie Schallwellen, Schwingungen und chemische Einflüsse positiv darstellt.

Weiterhin wird ein neuer Stoff hergestellt, wobei dem PVB-Kunststoffsekundärprodukt quellförmige Zelluloseprodukte in einem Verhältnis bis zu 50 % angereichert und hergestellt wird. Dabei sind die quellförmigen Zelluloseprodukte mit Weichmacher bis zu 30 % angereichert.

Die Erfindung wird an einem Ausführungsbeispiel näher erläutert. Dabei handelt es sich um ein Verfahren zur Aufbereitung und Verarbeitung von PVB Material oder Schnitzeln. Das PVB wird als Restmaterial aus der Verwertung von Autoglasscheiben mit PVB Folien aufgearbeitet. Die Autoglasscheiben werden in einem mechanischen Verfahren so zerkleinert, daß dieses PVB Material mit Restbeimengungen von Glas verfügbar ist. In dem speziellen Ausführungsbeispiel soll das Verfahren zur Aufbereitung und Verarbeitung dieses Reststoffes von PVB Kunststoffen in seinen einzelnen Verfahrensschritten beschrieben werden. Das erfindungsgemäße Verfahren gemäß des Ausführungsbeispiels für die Aufbereitung und Verarbeitung von PVB Material oder Schnitzeln, insbesondere Partikeln, setzt sich erfindungsgemäß aus folgenden Verfahrensschritten zusammen.

Es erfolgt eine Lagerung von mehr als 1000 Stunden, wobei zeitweise eine Temperatur von 0 °C herrscht und eine Wasserzufuhr erfolgt.
1. PVB Partikel, welche von Glasanhaftungen und anderen Verunreinigungen befreit worden sind, werden erneut mit Wasser befeuchtet und gereinigt und unter Anwendung von Druckimpulsen mit einer Frequenz von > 1000 l/min beaufschlagt und optional unter Hinzufügen von Tensiden über einen Zeitraum von 5 - 10 min behandelt.
2. Von den PVB Partikeln wird das Reststoff- Wassergemisch abgetrennt. Das PVB-Material wird erneut mit Kreislaufwasser bei Temperaturen kleiner 60 °C beaufschlagt.
3. Mit dem Austrag von Kreislaufwasser ist die Reduzierung von Fremdpartikeln durch mechanisches Ausschnecken möglich. Für das PVB mit einem Wasseranteil < 5 % erfolgt die Weiterbewegung der Partikelschüttung.
4. Im Folgesystem werden Kunststoffpartikel mit einer Größe von mehr als 10 mm in einem perforierten Schneckentrog mittels Schnecke gerührt, wobei Fluid in einen Kreislauf geführt wird, welches größer 0,1 % Kalilauge enthält und in das ferner Kalkhydrat zugegeben wird. Dabei entsteht eine Acetatlösung, die Fluid zu 70 % Partikel anströmt, die durch den perforierten Trog hindurchtreten und zu ca. 30 % im Gegenstrom zu dem mittels geneigter Schnecke ausgetragenen PVB geführt wird. Während die restlichen Glaspartikel aus dem Kreislauf ausgetragen werden, wird die basischer Lösung weitgehend mit fällbarem Produkt angereichert, so daß diese in einem Absetzbehälter in den über einem Überlauf das Fluid austritt, ausgefällt werden können. Die schräg gestellte Austragsschnecke trägt das Material in eine Schneckenkaskade ein, in der es zuerst quer zur Fallrichtung und anschließend entgegengesetzt zur Anströmrichtung mit einem Fluid angeströmt wird, das wiederum Kalium und Kalziumione enthält. PVB und Restverunreinigungen werden in der Kaskade in verschiedenen Höhen durch Schneckenapparate ausgetragen, wobei die Schnecke das Fluid-PVB-Gemisch gemeinsam aus der Aufgabekammer herausführt.
5. Die zerkleinerten Partikel mit einem Feuchtegehalt < 5 % werden aus der Schüttung in ein pneumatisches System überführt, und hier durch mehrfaches Beaufschlagen mit Trockenluft, mit einer Temperatur von 60 - 100 °C, bei einer Verweilzeit < 300 sec getrocknet. Die Trockenluft wird mit einem Anfangsdruck im Anströmraum < 5000 kPa eingeblasen und gleichzeitig im Gegenstrom zum Guteintrag und als Fördermedium in der Druckleitung geführt.
6. Die PVB Partikel werden dabei in einen Entspannungsraum mit einem Druck von 100 - 1500 kPa abgeleitet und gehen in das zweite, nach demselben Prinzip arbeitende pneumatische Fördersystem über, bis zum Erreichen des letzten pneumatischen Fördersystems der Reihe, und das Erhitzen des Partikelstromes auf 70-100 °C.
7. Das optionale Abmischen erfolgt mit Komponenten in fester Form vom 2. bis n-ten Fördersystem.
7a. Das optionale Abmischen erfolgt mit thermoplastischen Komponenten.
7b. Das optionale Abmischen erfolgt mit elastomeren Komponenten.
7c. Das optionale Abmischen erfolgt mit mineralischen Komponenten.
7d. Das optionale Abmischen erfolgt mit PVB Zusätzen.
7e. Das optionale Abmischen erfolgt mit organischen Komponenten.
8. Das Abmischen des Partikelstromes erfolgt mit feinem Mahlgut der Komponenten nach 7. mit einem Anteil von 5-25 %, und einem leicht verdampfbaren, flüchtigen Stoff bzw. verträgliche Stoffe. Dabei können verträgliche Weichmacher wie Naphthalin, Füllstoffe wie z. B. Kreide, Verträglichkeitsmacher wie z. B. Primer oder hydrophobe Stoffe, beigemischt werden.
9. Das Abmischen wird mit bis zu 65 % Anteil einer oder mehrerer Komponenten mit Partikeln aus Recycling PVB über 1 bis 4 Einspeisestellen durchgeführt.
10. In der Vorstufe getrocknetes PVB gelangt pneumatisch in einen Behälter, in den über Dosierungen weitere Komponenten eingetragen werden können. Diese Komponenten bilden gemeinsam mit dem PVB in den nachfolgenden Verfahrensschritten ein neues Produkt. Vorzugsweise werden Elastomere und Thermoplaste auch möglicherweise Recyclate zugeführt, die die Zusatzkomponenten bilden, die stofflichen Eigenschaften des Produktes mitbestimmen und dazu chemische Stoffe beinhalten, mit denen das Produkt modifiziert werden kann. Die Modifizierung des Produktes tritt sowohl durch die Eigenschaften der zusätzlichen Komponenten bzw. durch die Wirkung der chemischen Stoffe ein, die die Zusatzkomponente beinhaltet.
   Um die Konzentration der zugeführten chemischen Stoffe definiert aufrecht zu erhalten, wird der Behälter einem Überdruck zwischen 1,5 bis 20 mbar ausgesetzt.
   Bei einer Fahrweise mit flüchtigen Zusatzkomponenten beträgt der Überdruck vorzugsweise 6 bis 12 mbar, als Träger für Weichmacher, Füllstoffe, Sperrstoffe und
   Verträglichmacher beträgt der Überdruck vorzugsweise 1,5 bis 3 mbar. Das Material wird durch eine Schnecke gleichzeitig umgewälzt und gefördert.
   Die Wirkung der Schnecke hat eine Verteilung der Komponeten und gleichzeitig die Auflösung von Wasserstoffbrücken zwischen PVB-Partikeln zur Folge. Das Mengenverhältnis der Komponenten richtet sich nach den Rezepturen der hergestellten Stoffe. Bei Anweisenheit von flüchtigen Stoffen ist die aus dem Behälter austretende Förderluft über einen Abscheider zu führen. Die im PVB verbliebene Konzentration der Komponenten wird durch die Guttemperatur und den Behälterdruck eingestellt. Mit der Förderluft werden max. 1 % der zugeführten flüchtigen Komponenten, z. B. Naphthalin durch Einhaltung der Temperatur von max. 5 °C und eines Druckes von max. 20 mbar ausgetragen. Den Austrag des Produktes aus dem Behälter gewährleistet eine Dosierschnecke.
11. Die Partikel werden als stoffliches Basissystem auch in Anwesenheit anderer Stoffe, wie z.B. Kunststoffe, Zellulose, Glas, Gummi, Aluminium, Kreide, Bariumsulfat oder anderen Zusätzen und von leichtverdampfbaren flüchtigen Stoffen über ein mit einer Schnecke ausgerüstetes Fördersystem einem Raum zugeführt, in dem sie bei Eintritt in den Raum durch Verdichtung in Folge der elastische Konsistenz des stofflichen Basissystems eine Materialspannung erfahren. Der Materialinnendruck des Basissystems beträgt im Verdichtungsraum 1,5 bis 20 mbar.
12. Nach dem Austreten aus dem Verdichtungsraum tritt, als Folge der Wirkung einer horizontalen Förderschnecke in einem Übergangsstück, eine Entspannung auf 0,9 - 1,3 bar ein, während die mit Gas und flüchtigen Bestandteilen gefüllten Zwischenräume im Material den Gasdruck des über eine Leitung angeschlossenen evakuierten Raumes nahezu annehmen, der über 1000 Pa liegt und vorzugsweise 5000 bis 20 000 Pa beträgt, wobei die Temperatur des vorverdichteten und anschließend entspannten PVB ca. 50 °C liegt.
13. Es wird in das bestehende Gemisch vor der Extrusion ein Treibmittel eingebracht, womit eine Bläschenstruktur ausgebildet wird unter einer Temperatur von max. 150 °C mit einem Temperaturgradienten aufsteigend bis zur Düse bis auf max. 190 °C.
14. Herstellung eines Flächengebildes aus PVB-Partikeln oder Fäden oder Strängen, denen poröse oder körnige mineralische oder organische Stoffe zugemischt werden, welches durch flächenmäßiges Ausbreiten des Schüttgutes oder durch Auslegen von Fäden oder strangförmigen Gebilden in Mischung mit den Zusatzstoff bis zu 50 % als Fläche oder als Körper mit einer angeströmten Oberfläche als Filtrationskörper oder Dämmkörper eingesetzt werden kann.
   Weiterhin kann ein Gebilde als stoffliche Einheit hergestellt werden, das anschließend strangförmig geteilt und geschnitten wird und mit einem Wassergehalt kleiner 1 % mit körnigen Produkt durch Ausbildung von Wasserstoffbrücken verbunden wird.
15. Das erst vorverdichtete und anschließend entspannte PVB wird aus dem Übergangsstück sofort mit der Schnecke in einen Zylinder (Extruderzylinder) weitergefördert und dabei kontinuierlich in dem Schneckenabschnitt von maximal 16 x Durchmesser, auf einen Druck von 5 bar und einer Temperatur von 150 bis 155 °C gebracht, wobei verfahrensbedingt die Gasräume, welche in Verbindung stehen, im Basismaterialanteil und/oder in dem Anteil von Zumischungen auf einem Schneckenabschnitt von bis zu 12 x Durchmesser bei dieser Temperatur, die hier durch Vor- und Aufheizung und nur teilweise durch Scherung erreicht wird, offen bleiben.
16. Anschließend wird durch eine weitere Temperaturerhöhung auf 170 °C und die Verdichtung des Materials der Aufschmelzprozeß durchgeführt, der bei maximal 190 °C, vorzugsweise bei 190 °C, für PVB abgeschlossen wird.
17. Anschließend erfolgt durch eine Kurzzeitmischung bei ca. 190 °C die endgültige Homogenisierung, unabhängig vom Aufschmelzzustand der Komponenten der Mischung, wie den verfahrensabhängigen organischen Komponenten.
18. Anschließend wird in der Relaxationszone nahezu keine Entspannung zugelassen, um das Produkt mit Drücken zwischen 60 und 160 bar dem Folgeprozeß zuzuführen. Mit der Filtration erfährt das Produkt bzw. die Mischung der Komponenten, die nicht geschmolzen bzw. mineralisch sind, eine Orientierung in Längsrichtung, die druck- und querschnittsabhängig bis zum Druckbalken der Gießeinrichtung erhalten wird, um Kristallisation und Spannungsverteilung im Extrudat zu vergleichmäßigen, wobei die Filterdurchlässigkeit infolge von Filterablagerungen auf dem Filtermittel verfahrensbedingt nicht wesentlich verringert wird, da das Filtermittel bewegt wird.
19. Das Produkt ist ein Flächengebilde eines PVB Sekundärproduktes/- PVB Produktes und/oder als Compound oder Mischung aus Produkten, zum Beispiel mit Thermoplasten, Elastomeren und/oder mineralischen Stoffen, und in Verbindung mit der Durchführung einer Oberflächenbehandlung der Flächengebilde als Vorbereitung für die Konfektionierung ein Erzeugnis darstellt, welches durch Laminierungs- und/oder Press-, Spritzguß-, Tiefzieh- oder sonstigen Prozeß weiterverarbeitet wird oder für den Direkteinsatz geeignet ist.
20. Ergebnis ist das Herstellen eines Flächengebildes aus PVB Sekundärstoffen und/oder Compounds aus PVB Sekundärstoffen, bei denen nicht-thermoplastische Stoffe zur Oberflächenbehandlung aufgetragen werden.
21. Ergebnis ist das Herstellen eines Flächengebildes aus Laminaten, das an 1 bis x genannten Flächengebilden durch Walzen oder Pressen und anschließendes Aufwickeln oder durch anschließendes thermoplastisches Verformen des Flächengebildes erfolgt.
22. Ergebnis ist das Herstellen eines Laminates mit einer oder mehreren Schichten eines Glases oder Gewebes.

Das verfahrensbedingte PVB-Kunststoffsekundärprodukt wird nun erfindungswesentlich zur Herstellung eines neuen Stoffes verwandt. Der neue Stoff setzt sich zusammen aus dem PVB-Kunststoffsekundärprodukt und einer Zumischung von mindestens 5 % PP oder PE. Dieser neue Stoff aus dem PVB-Kunststoffsekundärprodukt und dem Vermischungsanteil von mindestens 5 % PP und PE weist gute physikalische Eigenschaften wie Oberflächenfestigkeit, Schall- und Schwingungsadaption, spezielle Eigenschaften in Bezug auf die Wasseraufnahme und Wasserabgabe, welche gering sind, auf. Ausgehend von den Eigenschaften des neuen Stoffes aus der Mischung PP oder PE mit dem PVB-Kunststoffsekundärprodukt werden in besonderen Anwendungsfällen Folien, Platten, rißfeste Planen, Abdeckflächen, Montageflächen, Formkörper hergestellt. Durch diese neuen Anwendungsfälle wird eine Abdichtung gegen Staub, Öle oder auch gegen physikalische Wirkung, wie zum Beispiel Schallwellen, hervorgerufen. Flächen und Formkörper aus dem neuen Stoff dienen auch zum Einsatz im Zusammenhang mit der Minderung von Wirkungen von physikalischen und chemischen Einflüssen auf Bauwerken oder auf den Menschen. Eine weitere Verwendungsform des neuen Stoffes stellt sich dar, indem Flächengebilde bzw. Platten gefüllt mit mineralischen Komponenten, wie zum Beispiel Kaliumsulfat, Gummimischungen und/oder Ethylenvenylacetat mit einer Stärke bis zu 15 mm hergestellt werden. Durch eine Umformung von Plattenabschnitten in einem weiteren Arbeitsgang durch Pressen oder Tiefziehen zu Formkörpern, die als Dämpfungselemente gegen Schwingungen oder Schallwellen eingesetzt werden, indem sie als Formköper in einem Fundament eingesetzt oder auf einem Untergrund aufgesetzt werden, indem sie in einem Fundament oder Rahmen aufgestellt werden oder als Ablaufelemente oder als Ablauf- bzw. Lauffläche dienen, die durch Formelemente oder Formgebung verbunden sein können. Weiterhin wird der neue Stoff zur Herstellung von Formkörpern oder Formgebilden durch zusätzliche Hinzufügung von Elastomeren (Gummi) mit dem Ziel der Erzeugung von thermoplastischen, verformbaren, elastischen Formkörpern mit den diesseitig gezeigten Eigenschaften verwendet wird.

Weiterhin kann ein neuer Stoff hergestellt werden, wobei dem PVB Kunststoffsekundärprodukt quellförmige Zelluloseprodukte mit einer Konzentration von 50 % zugeführt werden. Dabei ist ein Weichmacher bis zu 30 % in dem quellförmigen Zelluloseprodukt enthalten.

Die erfindungsgemäße Vorrichtung wird anhand eines weiteren Ausführungsbeispiels dargestellt.

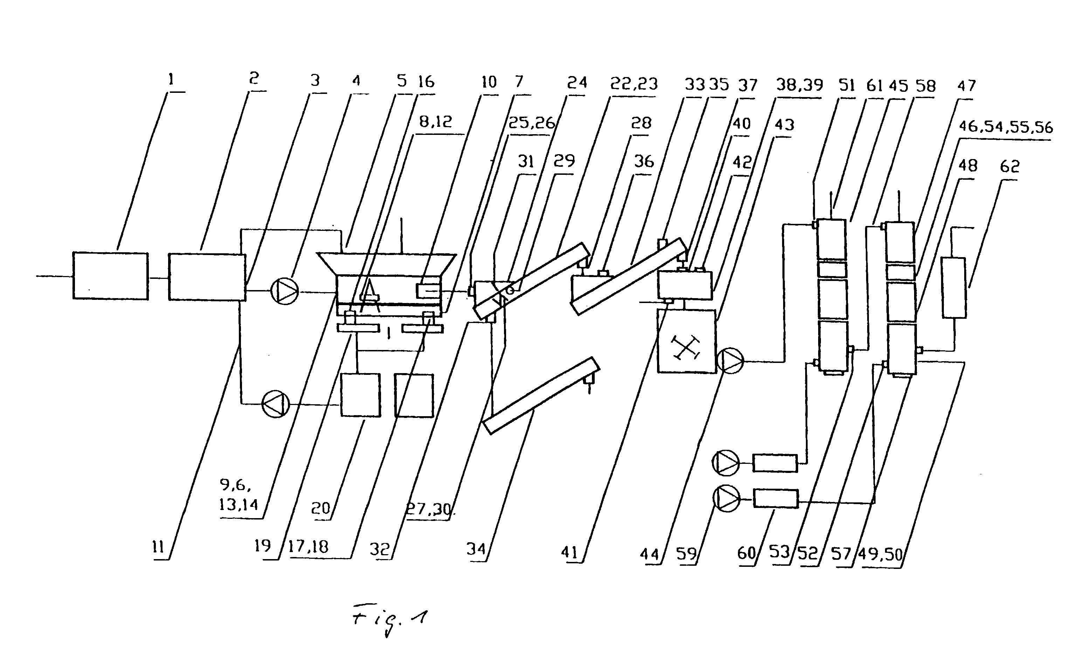

- Figur 1 zeigt:: schematische Darstellung der Anlage;

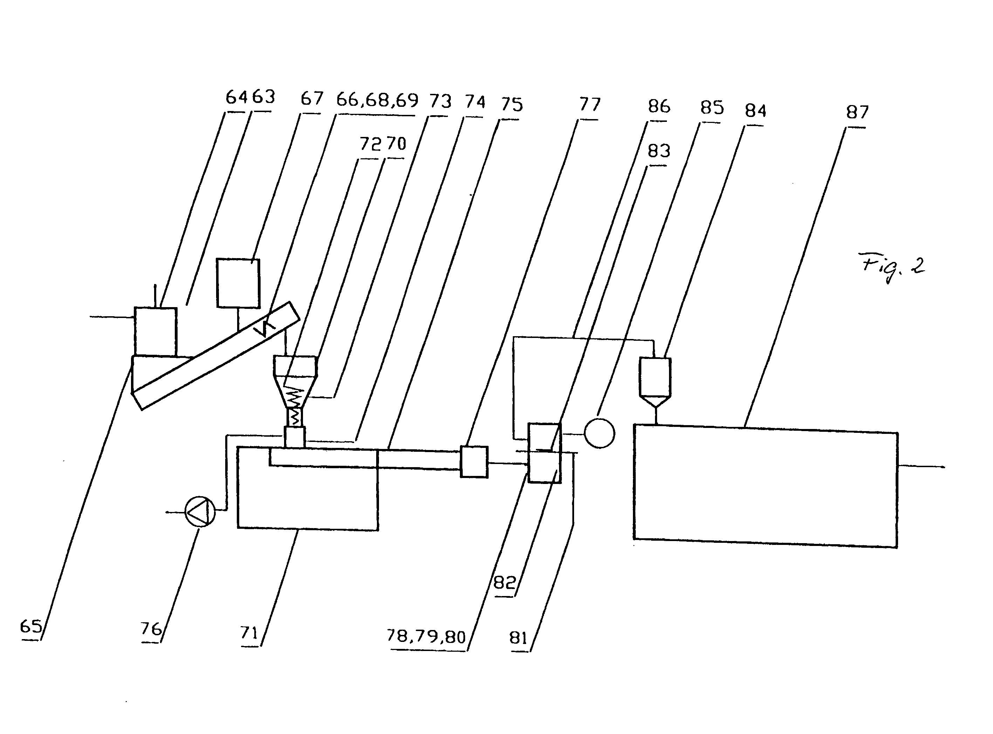

- Figur 2 zeigt:: schematische Darstellung der Anlage;

In der obengenannten Gliederung besteht der Vorrichtungskomplex im ersten Teil aus einem Behältersystem 1, in das das PVB mittels Flurförderzeug durch Öffnungen 2, die sich oben befinden, aufgegeben wird, und in dem es aufgrund der Behältergröße in Anwesenheit von Wasser entsprechend vorgegebener Verfahrensmerkmale verweilt. Durch Wasserzuführungsrohre, die sich gegenüber der Auslaßöffnung 3 befinden, wird Wasser eingestrahlt und gemeinsam mit dem PVB am Überlauf ausgetragen. Der erste Teil des Behältersystems besteht aus ortsfesten Einrichtungen. Der zweite Teil des Behältersystems ist transportabel und besitzt höhere Seitenwände.

Das Gut gelangt am Überlauf in ein Pumpensystem 4, bestehend aus Ansaugebehälter, Pumpe und Wasserkreislauf.

In der Doppelschneckenkaskade 5 wird das Gut, das jedoch auch mit einem Flurförderzeug eingetragen werden kann, Scherkräften unterzogen und im Wasserstrom gereinigt. Die Doppelschneckenkaskade besteht aus den Behälterteilen 6, dem Boden 7, den Schneckensystemen 8, dem Kasten 9, dem Überlauf 10 und dem Wasserkreislauf 11. Die Schneckensysteme liegen parallel nebeneinander und sind gleichsinnig steigend. Sie besitzen einseitig eine Kehrwendel 12. An den Behälterteilen befinden sich gepanzerte Scherkanten 13 und geschützte Durchbrüche 14. Der Behälterboden 7 ist beweglich gelagert und besitzt mehr als eine Öffnung 16 für die Ableitung des Wassers, von Glas und anderen Stoffen. In den Öffnungen befinden sich Vibrationskerne 17, bestehend aus abwechselnd beidseitig geneigten plattenförmigen Elementen 18. Die Vibrationskerne sind auf Schwingern 19 gelagert, welche neben ihrer Funktion in Verbindung mit den Vibrationskernen gleichzeitig den Guttransport vollziehen und das flüssige Trägermedium in Behälter 20a, 20b, die Bestandteil des Wasserkreislaufs 11 sind, ableiten.

Der Überlauf 10 ist in Längsrichtung seitlich angeordnet und tritt bei einer Drehrichtungsänderung einer Schnecke der Kaskade in Funktion. Dabei gelangt das Gut in die Folgesysteme.

Die Entwässerungsschnecke 22 besteht aus einem Trog 23 mit einem aufgesetztem Behälter 24, in den in Längsrichtung des Apparates Wasser eingestrahlt wird. Die Strahlvorrichtung 25 zum Einströmen des Wassers ist ein Diffusor, der durch mehr als ein Leitblech 26 in Strömungskanäle unterteilt ist. Die Entwässerungsschnecke besitzt ferner Schneckenelemente 27, die in Höhe der unteren Austragsöffnung unterbrochen sind. Der unterbrochene Bereich ist in einem Winkel α, kleiner 250°, hinter der Einströmöffnung angeordnet, welche sich wiederum unter dem Überlauf 21 der Doppelschneckenkaskade 5 befindet. Die Entwässerungsschnecke 22 besitzt einen Produktausgang 28, im Abstand eins zu zwei von der unteren Öffnung, in bezug auf die Linie des Wasserniveaus. Der Wasseraustritt 29 liegt unter der Linie des Wasserniveaus, im Schneckenbereich des Troges 30. In Höhe des Wasseraustrages ist ein gewölbter Käfig 31 in den Behälter 24 eingebaut. Sowohl das Produkt, das am oberen Austritt anlangt, als auch Reststoffe, die den unteren Austrag 32 passieren, werden durch geeignete Zwangsfördereinrichtungen 33, 34, wie zum Beispiel Schnecken, abtransportiert. Das Förderaggregat für das Produkt besitzt Zu- und Ableitungstutzen 35, 36 für Warmluft und einen Gutaustrag 37 über einer Vibrationseinrichtung 38.

Die Vibrationseinrichtung dient der Verteilung des Gutstromes. Sie besitzt ein Schwingsieb 39, das durch eine obere Öffnung 40 mit Gut beaufschlagt und eine untere Öffnung 41 mit Luft angeströmt wird. Vor dem Austragsstutzen, der diagonal von der Eintragsöffnung unterhalb des Schwingsiebniveaus endet, ist das Schwingsieb unterbrochen. Die Unterbrechung weist eine Höhe von 20 bis 120 mm auf. Die Vibrationseinrichtung steht in Verbindung mit einer Dosiervorrichtung 42, über die Zusatzkomponenten in das System eingetragen werden können.

Eine elastische Verbindung stellt den Übergang zu einer Zerkleinerungseinrichtung 43 her. Die Zerkleinerungseinrichtung, zum Beispiel eine Mühle, entläßt das Gut über ein Lüftersystem 44 in die Strömungstrockner 45.

Die Stömungstrockner 45 bestehen jeweils aus dem Ringkanal 46, dem darüberliegenden Gutabscheider 47, dem darunterliegenden Konus 48, der Mischkammer 49 und der Rotationskammer 50. Der Gutaufgabestutzen 51 befindet sich tangential am Gutaufgabeschuß. Der Warmlufteintrag 52 befindet sich tangential angeordnet an der Rotationskammer 50. Der Gutaustrag 53 ist oberhalb der Luftzuführung, ebenfalls tangential, angeordnet. Der Ringkanal 46 wird durch einen Mantelschuß 54 und ein Zentralrohr 55 gebildet. Das Durchmesserverhältnis beträgt drei zu eins. Das Zentralrohr ist am oberen Ende gedeckelt und besitzt seitliche Luftaustrittsöffnungen 56. Am unteren Ende ist es offen. Es reicht bis auf eine Höhe von einem Drittel des konischen Schusses 48 und damit in den Staudruckbereich der Kernströmung. Der Durchmesser der Abluftöffnung zentral über dem Aufgabeschuß ist gleich dem Durchmesser des Ringkanalschusses. Die Durchmesser von Ringkanal 46 und Rotationskammer 50 weisen ein Durchmesserverhältnis von etwa eins zu zwei auf. Die Rotationskammer 50 besitzt eine zentrale, verschließbare Auslaßöffnung 57.

Mehrere Stömungstrockner können in Reihe geschaltet werden, indem der Gutaustrag und die Gutaufgabe durch eine Rohrleitung 58 verbunden werden. Der bzw. die Strömungstrockner sind Bestandteil einer Trocknungsanlage, die ferner aus Druckventilatoren 59, Wärmeübertragern 60 und Abluftsystemen 61 besteht. Durch die Strömungstrocknerkaskade und ein hinter dem letzten Strömungstrockner angeordnetes Zusatzaggregat 62 werden die für die Trocknung erforderliche Relativgeschwindigkeit Gut-Trockenluft, die Teilchenverweilzeit in der Trockenluft und die Triebkraft für den Stoffübergang eingestellt.

Das Gut gelangt im verfahrensgemäßen Zustand in die nachgeschalteten Mischbehälter 63, in denen gleichzeitig eine weitere Zumischung von Stoffen und eine Abpufferung der Materialmenge für die Weiterverarbeitung erfolgt. Der Pufferbehälter ist mit einem Gutabscheider 64, einem Druckausgleichskasten 65, einem Förderaggregat 66 und einem Ausgleichsbehälter 67 ausgerüstet. Das Förderaggregat 66 wälzt das Material um und trägt es zu einer höherliegenden Austragsöffnung. Bestandteil des Mischbehälters ist ein Rotor 68 in einer Ringkammer 69, der für die Auflockerung der PVB bzw. Zusatzstoffpartikel sorgt und diese in eine innige Verbindung bringt. Der Rotor 68, z.B. ein Gummirotor, besitzt eine strukturierte Oberfläche und erzeugt Scherkräfte zwischen sich selbst und der Kammerwandung. Die Austragsöffnung steht in Verbindung mit einer Stopfschleuse 70, mit der wahlweise das Gut zwischenzeitlich abgelegt bzw. der Extrusion 71 zugeführt werden kann. Die Stopfschleuse besitzt eine vertikale, motorisch angetriebene Schnecke 72 mit drei Steigungsübergängen und einem konischen, trichterförmigen Behälterschuß 73. Der Austragskanal 73 kann wahlweise gekühlt oder beheizt werden.

Die Stopfschleuse dient als System gleichzeitig der Materialzuführung zur Extrusion 71. Sie steht am Produktaustrag mit der Druckkammer (73) in Verbindung. Es folgt anschließend ein Übergangsstück 74, in dem durch Erweiterung des freien Querschnittes um 15 bis 30 % eine Entspannung stattfindet. Am Übergangsstück beginnt der Extruderzylinder 75, und es ist das Vakuumsystem 76 für die Evakuierung der mit Gas gefüllten Materialzwischenräume angeschlossen. Der Extruder besitzt in seinem konventionellen Bereich eine PVB-Schnecke. Dem Extruder folgt der Meßkopf 77.

Im Anschluß an den Meßkopf 77 wird das Produkt einem Filteraggregat 78 zugeführt, durch das gleichzeitig eine Orientierung der Bestandteile des Produktes erreicht wird. In der Filtereinrichtung durchströmt das Produkt mindestens zwei bewegliche Platten 79, 80, zwischen denen das Filtermittel 81 geführt wird. Der Produktraum vor dem Filtermittel 82 ist im Vergleich zu dem Produktraum dahinter verkleinert, so daß sich bei Verschieben des beladenen Filtermittels 81 sich dieses von einer perforierten Stützplatte hinter dem Filtermittel 83 ablöst und transportiert werden kann.

In Abhängigkeit des Druckes in der folgenden Gießdüse 84 wird der Mechanismus für den Filtermitteltransport 85 betätigt und somit eine Druckkonstanz erreicht.

Der kontinuierlich arbeitende Filter 78 und die Gießdüse 84, aus der das Material als Fläche oder Strang ausgetragen wird, bilden in Verbindung mit den Schmelzeleitungen 86 das Produktaustragssystem.

In der sich anschließenden Konfektionierung 87 wird das Material in eine geeignete Form gebracht und abgekühlt.

## Patentansprüche

1. Verfahren zur Aufbereitung und Verarbeitung von Kunststoffen, die Polyvinylbutyral PVB mit Reststoffen, insbesondere Glasanhaftungen, beinhalten, und zur Herstellung eines Stoffes, wobei die Kunststoffe, die Polyvinylbutyral und Reststoffe beinhalten, gereinigt werden, physikalisch behandelt, einer Wäsche unterzogen werden, einem Extruder zugeführt und nachfolgend einer Filtration unterliegen, **dadurch gekennzeichnet,**
- **daß** folgende Verfahrensschritte nacheinander durchgeführt werden:
a) daß eine Lagerung von Kunststoffen, die Polyvinylbutyral mit Reststoffen enthalten, von mehr als 1000 Stunden ausgeführt wird, wobei zeitweise eine Temperatur von 0 °C herrscht und eine Wasserzufuhr erfolgt,
b) daß nachfolgend das Lagergut von Glasanhaftungen und anderen Verunreinigungen befreit wird,
c) daß die Kunststoffe mit Polyvinylbutyral und Reststoffen, insbesondere Glas und restliche Fremdstoffe mit Druckimpulsen mit einer Frequenz von > 1000 l/min beaufschlagt und gleichzeitig mit einem Fluid umströmt werden,
d) daß das PVB-Material von dem Reststoff-Wassergemisch abgetrennt wird,
e) daß das PVB-Material in Form von Kunststoffpartikeln einer Druck- und Temperaturbehandlung unterliegt und somit ein trockener Zustand erreicht wird,
f) daß dem PVB-Material elastomere, thermoelastische, organische und/oder mineralische Komponenten beigefügt werden, womit ein PVB-Komponentengemisch entsteht, um danach das PVB-Komponentengemisch einer Druck- und Temperaturbehandlung zu unterziehen, wobei eine Verdichtung erfolgt,
g) daß das PVB-Komponentengemisch einem Extruder zugeführt wird, wobei für das PVBKomponentengemisch ansteigende Druck- und Temperaturparameter bis zum Aufschmelzprozeß eingehalten werden, wobei eine Temperatur nicht höher als 200 °C und ein Druck nicht höher als 16 MPa als Parameter dienen und das PVB-Material in der letzten Zone des Extruders keine Entspannung erfährt.
h) daß das extrudierte PVB-Komponentengemisch über eine Filtration anschließend in einer Gießdüse als Flächengebilde endlos hergestellt wird.

2. Verfahren nach Anspruch 1 **dadurch gekennzeichnet, daß** organische elastomere, thermoplastische, mineralische und andere flüchtige oder verträgliche Zusätze, wie Füllstoffe, beispielsweise Kreide, Verträglichkeitsmacher, beispielsweise Primer, oder hydrophobe Stoffe oder flüchtige Stoffe als Komponenten in das PVB-Material in Form von Partikeln bzw. als Komponenten in Verbindung mit Weichmachern, wie Naphthaline untergemischt werden.

3. Verfahren nach Anspruch 1 und 2 **dadurch gekennzeichnet, daß** bei der Verdichtung gemäß Verfahrensschritt f) des Hauptanspruches ein Druck von 0,15 bis 2 MPa aufrechterhalten wird, um somit die Konzentration der zugeführten chemischen Stoffe definiert aufrecht zu erhalten.

4. Verfahren nach Anspruch 3 **dadurch gekennzeichnet, daß** die Mischung weitergefördert und entspannt wird bis hin zur Einführung in einen Extruder gemäß Verfahrensschritt g), wobei die Mischung eine heterogene Gas-Feststoff-Schüttung bildet, deren Hohlräume in der Schüttung den Gasdruck des über eine Leitung angeschlossenen evakuierten Raumes nahezu annehmen, der 5.000 bis 20.000 Pa beträgt, wobei die Temperatur des verdichteten und anschließend entspannten PVB-Komponentengemisches bei ca. 55 °C liegt.

5. Verfahren nach Anspruch 4 **dadurch gekennzeichnet, daß** in die Mischung des PVB-Komponentengemisches vor der Extrusion ein Treibmittel eingebracht wird.

6. Verfahren nach Anspruch 1 **dadurch gekennzeichnet, daß** in der Extrusion eine Bläschenstruktur zur Absenkung der Dichte im geschmolzenen Kunststoff ausgebildet wird, wobei nachfolgend einer Ausbildung der Bläschenstruktur die Temperatur bis zur Entspannung auf maximal 100 °C angehoben wird und anschließend das Kunststoff-Komponenten-Gemisch in der Extrusion auf einer Strecke von maximal 16 x Durchmesser der Schnecke auf einen Druck von 1,5 MPa und eine Temperatur von 150 °C bis 155 °C gebracht wird, wobei verfahrensbedingt die Hohlräume der Mischung dadurch bestehen bleiben, daß die Temperatur auf einem Schneckenabschnitt bis 12 x Durchmesser auf eine Temperatur vorzugsweise durch Vor- und Aufheizen und nur teilweise durch Scherung gebracht wird.

7. Verfahren nach Anspruch 1 und 6 **dadurch gekennzeichnet, daß** anschließend in der Extrusion auf dem folgenden Schneckenabschnitt durch eine weitere Temperaturerhöhung auf 160 bis 170 °C und die Verdichtung des Materials der Aufschmelzprozeß durchgeführt und bei maximal 190 °C abgeschlossen wird, und anschließend eine Kurzzeitmischung bei 190 °C die Fließfähigkeit erhöht und unabhängig vom Aufschmelzzustand der Komponenten der Mischung, wie den verfahrensabhängigen organischen Komponenten, auf das Material wirkt.

8. Verfahren nach Anspruch 1, 6 und 7 **dadurch gekennzeichnet, daß** in der Extrusion im letzten Schneckenabschnitt keine Druckreduzierung eintritt und das Produkt mit Drücken zwischen 6 bis 16 MPa dem Folgeprozeß Filtration mit der erhöhten Fließfähigkeit zugeführt werden und daß die geschmolzenen Stoffe eine Orientierung der Makromoleküle und auch die darin befindlichen nicht geschmolzenen bzw. mineralischen Stoffe eine Orientierung der Partikel Agglomerate in Längsrichtung erfahren, die Druck- und Querschnittsabhängigkeit erhalten wird, um Kristallisation und Spannungsverteilung im Extrudat zu vergleichmäßigen.

9. Verfahren nach Anspruch 1 **dadurch gekennzeichnet, daß** bei der Herstellung eines Flächengebildes gemäß des Verfahrensschrittes h) unter einem Druck von > 1 MPa eingewalzt und somit hergestellt wird.

10. Verfahren nach Anspruch 1 und 9 **dadurch gekennzeichnet, daß** ein Flächengebilde als Laminat aus 1 bis x getrennten Flächengebilden des extrudierten Stoffes durch Walzen oder Pressen und anschließendes Aufwickeln hergestellt wird oder durch anschließendes thermoplastisches Verformen des Flächengebildes Formkörper hergestellt werden.

11. Verfahren nach Anspruch 1 **dadurch gekennzeichnet, daß** aus dem extrudierten PVB-Komponentengemisch gemäß des Verfahrensschrittes g) anschließend ein Laminat mit einer oder mehreren Schichten mit Glas oder Gewebe hergestellt wird.

12. Verfahren nach Anspruch 1 und 11 **dadurch gekennzeichnet, daß** aus dem extrudierten PVB-Kompontentengemisch gemäß des Verfahrensschrittes g) eine Mischung des PVB-Komponentengemisches und anderen Thermoplasten und/oder Elastomeren hergestellt wird, die mindestens eine Schicht des Laminates, Formkörpers oder Flächengebildes bildet.

13. Stoff **dadurch gekennzeichnet, daß** der Stoff sich aus dem extrudierten PVB-Komponentengemisch gemäß Verfahrensanspruch g) des Anspruches 1 und einer Zumischung von 5 % bis 25 % PP oder PE zusammensetzt.

14. Stoff **dadurch gekennzeichnet, daß** der Stoff sich aus dem PVB-Material aus dem Verfahrensschritt e) des Anspruches 1 in Form von Kunststoffpartikeln, welche vor der Extrusion als unextrudiertes Halbzeug aus PVB-Partikeln, Fäden oder Strängen vorhanden sind und aus bis zu 50 % organischen oder mineralischen Stoffen als eine körnige Schüttung oder als Schüttung mit Partikeln, die eine Bläschenstruktur aufweisen, zusammensetzt und sich zum Einsatz als Filtrationsoder Dämmkörper eignet.

## Claims

1. A method for conditioning and processing of synthetic materials containing polyvinyl butyral PVB and residuals, in particular glass adhesions, and in which the synthetic materials containing polyvinyl butyral and residuals, are purified, physically treated, washed, charged to an extruder and subsequently subjected to filtration, in order to produce a medium , **characterised in that**
- the following process phases are performed in succession:
a) synthetic materials containing polyvinyl butyral and residuals are stored for more than 1000 hours under temporary temperatures of 0 °C and addition of water,
b) the stored matter is subsequently cleared of glass adhesions and other impurifications,
c) the synthetic materials with polyvinyl butyral and residuals, in particular glass and other foreign matter are charged with pressure momenta at a frequency of > 1000 l/min and simultaneously bathed with a fluid,
d) the PVB material is separated from the residuals-water mixture,
e) the PVB material in the form of synthetic material particles is subjected to pressure and temperature treatment and thus a dry condition is achieved,
f) the PVB material is admixed with elastomeric, thermo-elastic, organic and/or mineral components to create a PVB-components mixture, after which the PVB-components mixture is subjected to pressure and temperature treatment to effect a consolidation,
g) the PVB-components mixture is charged to an extruder, wherein increasing pressure and temperature parameters are maintained for the PVB-components mixture until the melting process sets in, with the parameters being a temperature not higher than 200 °C and a pressure not higher than 16 MPa and the PVB material is not relieved in the final extruder zone.
h) the extruded PVB-components mixture is then filtered an produced continuously as a sheet formation in a casting die.

2. A method according to claim 1 **characterised in that** organic elastomeric, thermo-plastic, mineral and other volatile or compatible additives, like fillers, such as chalk, compatibility-enhancing agents, such as primers or hydrophobic media or volatile media are admixed as components into the PVB material in the form of particles or as components in connection with plasticizers, such as naphthalene.

3. A method according to claims 1 and 2 **characterised in that** during densification according to process step f) of the main claim a pressure of 0.15 to 2 MPa is maintained in order to upkeep the concentration of the added chemical media in a defined manner.

4. A method according to claim 3 **characterised in that** the mixture is continued to be conveyed and relieved until charged into an extruder according to process step g) wherein the mixture forms a heterogeneous gas-solids fill whose voids nearly take on the gas pressure of 5,000 to 20,000 Pa in the chamber that is evacuated via connected duct, with a temperature of the densified and then relieved PVB-components mixture of ca. 55 °C.

5. A method according to claim 4 **characterised in that** a blowing agent is introduced into the PVB-components mixture prior to extrusion.

6. A method according to claim 1 **characterised in that** during extrusion a fine-bubble structure is formed in order to reduce the density in the melted synthetic material, wherein after the formation of the fine-bubble structure temperature is increased until relief to a maximum of 100 °C and subsequently the synthetic material-components mixture in the extrusion is brought to a pressure of 1.5 MPa and a temperature of 150 °C to 155 °C over a distance of maximally 16 x diameter of screw, wherein the voids in the mixture remain process-specifically existent, due to the fact that the temperature over a screw section up to 12 x diameter is warmed up to a temperature, preferably by pre-heating and heating, and only partially by means of shearing.

7. A method according to claims 1 and 6 **characterised in that** subsequently in the upstream screw section in the extrusion the melting process is performed by means of a further temperature increase to between 160 and 170 °C and densification of the material and completed at a maximum of 190 °C, and subsequently a temporary mixture at 190 °C increases the flowability and makes an impact on the material, irrespective of the melting state of the components in the mixture, such as process-specific organic components.

8. A method according to claims 1, 6 and 7 **characterised in that** there is no pressure reduction in the extrusion in the last screw section and that the product is charged to the follow-up process filtration at pressure between 6 and 16 MPa with their enhanced flowability and that the melted media experience an orientation of their macromolecules and that also the contained non-melted or mineral media experience an orientation of their particle agglomerates in longitudinal direction, their pressure and cross-section dependability is maintained, in order to homogenise crystallisation and stress distribution in the extrudate.

9. A method according to claim 1 **characterised in that** during production according to process step h) a sheet formation is created under a pressure of > 1 MPa by means of rolling in.

10. A method according to claims 1 and 9 **characterised in that** a sheet formation is produced as a laminate from 1 to x separated sheet formations of the extruded media by means of rolling or pressing and subsequent coiling or that mouldings are produced by subsequent thermo-plastic forming of the sheet formation.

11. A method according to claim 1 **characterised in that** a laminate with one or more layers of glass or fabric is subsequently made from the PVB-components mixture extruded according to process step g).

12. A method according to claims 1 and 11 **characterised in that** the PVB-components mixture extruded according to process step g) is used to make a mixture of the PVB-components mixture and other thermoplastics and/or elastomers which forms at least one layer of the laminate, moulding or sheet formation.

13. A medium **characterised in that** the is composed of the PVB-components mixture extruded according to process step g) in claim 1 and an added 5 % to 25 % PP or PE.

14. A medium **characterised in that** the medium is composed of the PVB material described in process step e) in claim 1 in the form of synthetic material particles, which are provided prior to extrusion as non-extruded intermediates from PVB particles, filaments or strands and up to 50 % of organic or mineral media as a granular fill or fill with particles having a fine-bubble structure, and which is suitable for application as a filtration or insulating material.

## Revendications

1. Procédure visant à la préparation et au traitement de matières artificielles contenant du polybutyral de vinyle, des substances résiduelles y comprises, et en particulier des particules en verre adhésifs et qui sert à la fabrication d'une substance; cependant, les matières artificielles qui contiennent du polybutyral de vinyle et des substances résiduelles sont soumises à une purification et à un traitement physique ainsi qu'à un lavage pour être ensuite transférées vers une extrudeuse et finalement vers le processus de filtration ; cette procédure **étant caractérisée par le fait**
- **que** les différentes opérations de base sous-mentionnées sont réalisées progressivement :
a) une mise en dépôt de matières artificielles contenant du polybutyral de vinyle, des substances résiduelles y comprises, durant plus de 1000 heures est réalisée; cependant, la température se maintient temporairement à 0 °C et une alimentation en eau est assurée,
b) ensuite, les matières artificielles mises en dépôt sont débarrassées de particules en verre adhésifs et d'impuretés,
c) les matières artificielles contenant du polybutyral de vinyle et des substances résiduelles, en particulier du verre et d'autres matières polluantes, sont soumises à des impulsions de pression d'une fréquence de > 1000 l/min pour être simultanément baignées dans un fluide,
d) les matières artificielles sous forme de polybutyral de vinyle sont séparées du mélange d'eau-particules résiduelles,
e) les matières artificielles en polybutyral de vinyle sont soumises à un traitement de pression et de température sous forme de particules en matière artificielle ce qui fait qu'un état sec est atteint,
f) les matières artificielles sous forme de polybutyral de vinyle sont complétées par des composants d'élastomère, thermo-élastiques, organiques et/ou minéraux ce qui fait que se forme un mélange de polybutyral de vinyle et de composants, celui-ci étant ensuite soumis à un traitement par moyen de pression et de mise à température durant lequel une densification est effectuée,
g) le mélange de polybutyral de vinyle et de composants est transféré vers une extrudeuse ; cependant, des paramètres de pression et de température se trouvant en accroissement sont maintenues jusqu'à ce que le processus de mise en fusion commence ; reste à mentionner que les paramètres de température ne dépasseront pas les 200 °C et les paramètres de pression se situent en-dessous de 16 Mpa et que la matière artificielle sous forme de polybutyral de vinyle n'est pas relâchée au niveau de la dernière section de l'extrudeuse.
h) le mélange de polybutyral de vinyle et de composants soumise à une extrusion est ensuite transféré vers la filtration pour être finalement fabriqué de manière sans fin sous forme de produit mince au niveau d'une filière d'extrusion-coulée.

2. La procédure conformément à la revendication 1 **étant caractérisée par le fait que** des additifs organiques, d'élastomère, thermo-plastiques, des minéraux et d'autres additifs volatils ou compatibles, comme des matières de remplissage, par exemple de la craie, des matières assurant la compatibilité, par exemple des primaires, ou des substances hydrophobes ou des substances volatiles sont ajoutées à la matière artificielle de polybutyral de vinyle sous forme de particules ou de composants, étant également ajouté des substances d'adoucissement, comme des naphtalines.

3. La procédure conformément à la revendication 1 et 2 **étant caractérisée par le fait que**, durant la densification effectuée conformément à l'opération de base f) de la revendication principale, une pression variant entre 0,15 et 2 MPa est maintenue afin de pouvoir garantir une concentration stable des substances chimiques amenées comme prévu.

4. La procédure conformément à la revendication 3 **étant caractérisée par le fait que** l'on continue de refouler le mélange et de le relâcher jusqu'à ce qu'il entre dans l'extrudeuse conformément à l'opération de base g) ; cependant, le mélange forme un remblai de gaz et de matières solides dont les cavités existant au niveau du remblai ont la tendance de s'adapter à la pression du gaz de la salle évacuée et reliée au moyen d'une ligne, la pression s'élevant à une valeur variant entre 5.000 et 20.000 Pa et la température du mélange de polybutyral de vinyle et des composants densifié et relâché par la suite s'élevant à environ 55 °C.

5. La procédure conformément à la revendication 4 **étant caractérisée par le fait qu'**un agent moteur est ajouté au mélange de polybutyral de vinyle et de composants avant qu'il ne soit procédé à l'extrusion.

6. La procédure conformément à la revendication 1 **étant caractérisée par le fait qu'**au niveau de l'extrusion s'établit une structure formée par de petites bulles servant à réduire la densité de la matière artificielle fondue; cependant, une fois que la structure formée par de petites bulles s'est établie, la température est mise à 100 °C au maximum avant le début du relâchement, ensuite, le mélange de polybutyral de vinyle et de composants est soumis à une pression de 1,5 Mpa et mis à une température variant entre 150 °C et 155 °C durant l'extrusion et cela sur une section d'un diamètre de la vis de 16 x au maximum ; cependant, les cavités du mélange restent inchangées pour des raisons qui incombent à la génie du processus ce qui fait que, sur une section d'un diamètre de 12 x au maximum, la température est atteinte en particulier par préchauffage et échauffement et uniquement à part par cisaillement.

7. La procédure conformément à la revendication 1 et 6 **étant caractérisée par le fait que**, par la suite et durant l'extrusion sur la section suivante au moyen d'une autre augmentation de la température à 160 °C ou à 170 °C ainsi qu'au moyen de la densification de la matière, le processus de fonderie est réalisé et achevé à une température de 190 °C au maximum ; cependant, un mélange temporaire mise à une température de 190 °C augmente la fluidité et, indépendamment de l'état actuel de la fusion des composants du mélange, comme celui des composants organiques étroitement liées au procédé, produit un effet sur la matière.

8. La procédure conformément à la revendication 1, 6 et 7 **étant caractérisée par le fait qu'**au niveau de la dernière section, la pression exercée durant l'extrusion n'est pas réduite et le produit, doté d'une meilleure fluidité, est transféré vers la prochaine étape, à savoir celle de la filtration, à des pressions variant entre 6 et 16 MPa et, que les substances fondues et, plus précisément les macromolécules, sont orientés au sens longitudinal pendant que les substances non fondues ou les minéraux y existant, plus précisément les particules agglomérés, sont également orientés au sens longitudinal ; cependant, la relation en fonction de la pression et de la coupe transversale est maintenue afin d'équilibrer la cristallisation et la distribution de tension au niveau du produit d'extrusion.

9. La procédure conformément à la revendication 1 **étant caractérisée par le fait qu'**au cours du processus de fabrication, un produit mince est engagé au laminage et donc fabriqué conformément à l'opération de base h) sous une pression de > 1 MPa.

10. La procédure conformément à la revendication 1 et 9 **étant caractérisée par le fait qu'**un produit mince est fabriqué sous forme d'aggloméré laminé formé par un à x produits minces séparés de la matière soumise à l'extrusion ; cependant, ce produit mince est fabriqué par laminage ou compression et enroulement suivant ou sont produits du corps-modèle par déformation du produit mince.

11. La procédure conformément à la revendication 1 **étant caractérisée par le fait qu'**à partir du mélange de polybutyral de vinyle et de composants soumis à une extrusion, un produit de laminage, se composant d'une couche ou de plusieurs couches de verre ou de tissu est ensuite produit conformément à l'opération de base g).

12. La procédure conformément à la revendication 1 et 11 étant **caractérisée par le fait qu'**à partir du mélange de polybutyral de vinyle et de composants soumis à une extrusion, un produit mixte du mélange de polybutyral de vinyle et de composants et d'autres matières thermoplastiques et/ou d'élastomères est produit conformément à l'opération de base g), se composant d'au moins d'une couche du produit de laminage, du corps-modèle ou du produit mince.

13. La matière **étant caractérisée par le fait qu'**elle se compose du mélange de polybutyral de vinyle et de composants conformément à l'opération de base g) de la revendication 1 ainsi que d'un mélange additionnel contenant entre 5% et 25% de PP ou de PE.

14. La matière **étant caractérisée par le fait qu'**elle se compose de polybutyral de vinyle, résultat de l'opération de base e) de la revendication 1, sous forme de particules de matière artificielle, celles-ci existant avant l'extrusion en tant que produit sémi-fini non-extrudé sous forme de particules de polybutyral de vinyle, de fibres ou de barres et se composant à 50% au maximum de matière organique ou minéral sous forme de remblai granuleux ou de remblai mélangé de particules, équipées d'une structure de petites bulles pouvant être utilisée en tant que corps de filtration ou corps calorifuge.
